# EUROPEAN PATENT APPLICATION

(11) **EP 2 110 342 A1**
(43) Date of publication of application: **21.10.2009**
(21) Application number: 08007283.8
(22) Date of filing: 14.04.2008
(51) Int. Cl.: B65G 17/06, B65G 17/08

(54) **Conveyor belt**

(71) Applicant: Jonge Poerink Conveyors B.V., 7622 AV Borne (NL)
(72) Inventor: Brinkers, Joep Hendrik, 7151 DG Eibergen (NL)
(74) Representative: 't Jong, Bastiaan Jacob

(57) **Abstract**

The invention relates to a conveyor belt (1) comprising:
- a chain having a plurality of links (3), interconnected by rods, wherein each link (3) has a first opening (8) and a second opening (9), at least one of the openings being elongate and wherein a rod (10) connecting two following links (3) extends through the first opening (8) of the first link and through the second opening (9) of the second link;
- deck elements (2) having a deck support surface, which deck elements (2) are connected to a link (3) of the chain (1) and which extend on both sides of the link; and
- at least one guide post (4) connected to a deck element (2), wherein the guide post (4) extends perpendicular to the deck support surface of the deck elements.

## Description

The invention relates to a conveyor belt. In particular it relates to conveyor belts, which are suited for high speed. A high speed conveyor belt is considered a conveyor belt which travels at speeds of about 50m/min or more.

Conveyor belts which travel in a straight line can easily operate at such speeds. However, a conveyor belt, which has to follow a twisting path is however subjected to other forces and particular to the forces resulting from the inertia of the components of a conveyor belt. When such a conveyor belt makes a turn, the parts of the links on the inside of the curve will have to decelerate, while the link parts on the outside of the curve have to accelerate. This results for a known conveyor belt capable of following twisting paths in a substantial amount of noise and stresses, which decreases the lifetime of a conveyor belt.

Another disadvantage of known conveyor belts is that the driving force for driving the conveyor belt is transmitted through the links of the conveyor belt. In a curved path parts of those links have to decelerate and other parts have to accelerate. This results in that the conveyor belt will get compact in the inside of the curve and that this portion of the links will no longer be able to transmit the driving force of the conveyor belt. According only a small portion of the links will be able to transmit the driving force of the conveyor belt with as result higher stresses in those portions of the link.

It is now an object of the invention to provide a conveyor belt, which is suitable for following twisting paths and wherein the above-mentioned disadvantages are reduced.

This object is achieved according to the invention with a conveyor belt comprising:
- a chain having a plurality of links, interconnected by rods, wherein each link has a first opening and a second opening, at least one of the openings being elongate and wherein a rod connecting two following links extends through the first opening of the first link and through the second opening of the second link;
- deck elements having a deck support surface, which deck elements are connected to a link of the chain and which extend on both sides of the link; and
- at least one guide post connected to a deck element, wherein the guide post extends perpendicular to the deck support surface of the deck elements.

With the conveyor belt according to the invention, the driving force is transmitted through the chain. The deck elements provide for a large support surface on which products can be placed. By providing a guide post perpendicular to the deck support surface and connected to a deck element of the chain, the chain can be guided along a guide track. The number of guide posts is dependent of the curvature of the desired path. With a straight path, one guide post would be sufficient, while with a heavily curved path a number of guide posts must be arranged.

By providing a separated chain which transmits the drive force it is possible to adjust the choice of material to the function of the parts of the conveyor belt. As the chain has to take up the driving force, a metal would be a suitable choice. Preferably a steel is used for the chain. On the other hand the deck elements only have to support products. So for the deck elements a plastic could be a suitable choice.

In a preferred embodiment of the conveyor belt according to the invention, the deck elements are provided with first and second openings in line with the first and second openings of the respective link to which the deck element is connected. By providing these first and second openings in the deck elements, the rod, with which subsequent links are connected, can also extend through the first and second openings of subsequent deck elements. This provides for a more coherent structure of the conveyor belt and also provides that the driving force can be better transmitted to the products on the conveyor belt, especially when the products have to be decelerated or accelerated when going through curves in the conveyor belt path.

Preferably each link has a substantially U-shape comprising two leg portions and an interconnecting portion. With such a link, the first and second openings can be arranged in the leg portions.

In a very preferred embodiment a portion of a deck element is interposed between the rod extending through the elongate opening of a link and said link.

The interposed portion provides for a bearing in the belt, such that the rod extending through the elongate openings in the link cannot get in direct contact with the edges of these elongate openings, as the portion of the plastic deck element is interposed.

In another embodiment of the conveyor belt according to the invention the interposed portion of the deck element is in contact with both leg portions, in order to fill the space between the leg portions.

The interposed portion of the deck element, being in contact with both leg portions, prevents the leg portions of a link to approach each other under the influence of the pull forces in the belt. This could otherwise result in breakage of the link.

In another embodiment of the conveyor belt according to the invention, the at least one guide post has in transport direction of the conveyor belt a T-shaped cross-section. With such a T-shaped cross-section, the guide post can be guided in a guide track and due to the T-shaped cross-section the conveyor belt will not be able to derail from the guide track.

In yet another embodiment of the conveyor belt according of the invention, the guide post comprises a roller bearing for rolling contact with a guide track. The roller bearing reduces the friction between the guide post and the guide track, in particular in curves of the conveyor belt path.

The invention further relates to a conveyor system comprising:
- a conveyor belt according to the invention;
- a support for supporting the conveyor belt;
- a guide track in which the at least one guide post of the conveyor belt extends.

In a preferred embodiment of the conveyor system according to the invention, the guide track has a C-shaped cross-section. This is in particular advantages with a conveyor belt having a guide post with a T-shaped cross-section.

These and other advantages of the invention will be elucidated in conjunction with the accompanying drawings.
Figure 1 shows a conveyor belt according to the invention in perspective view.
Figure 2 shows the conveyor belt according to figure 1 in which some of the deck elements are removed.
Figure 3 shows in perspective view the conveyor belt according to figure 1 in this assembled state.
Figure 4 shows a cross-sectional view of a conveyor system according to the invention with a conveyor belt according to figure 1.
Figure 5 shows in more detail the connection of deck element, rod and link.

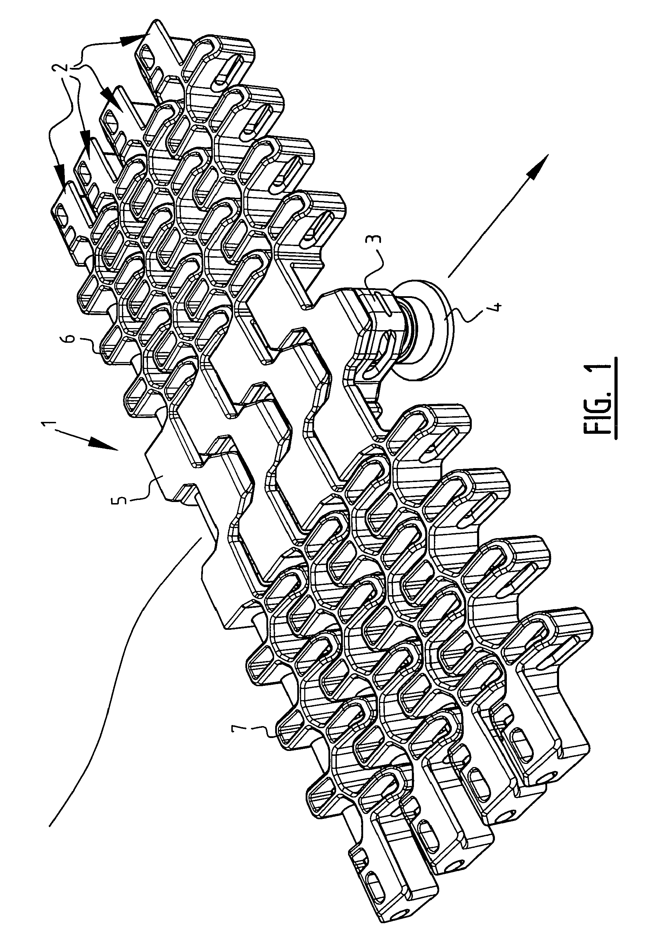

Figure 1 shows a conveyor belt 1 according to the invention. This conveyor belt has a number of deck elements 2, which are each connected to a link 3 of a chain. Deck element 2 is provided with a guide post 4 which will be described in more detail in the further figures.

Each deck element 2 has a central portion 5, which connects to a respective link 3 and two side portions 6, 7.

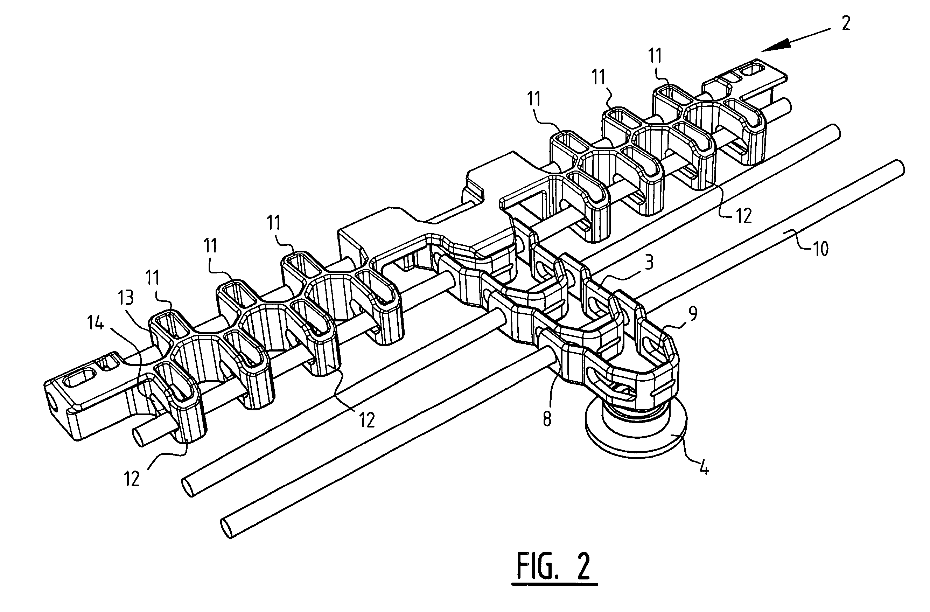

In figure 2 a number of the deck portions 2 have been removed, which reveals a number of links 3, which each have first openings 8 and second slot-shaped openings 9. A rod 10 connects to adjacent links 3 by extending through the first openings 8 of a first link 3 and through the second slot-shaped openings 9 of a second link 3.

It is furthermore clear from figure 2 that a deck element 2 has side portions 6, 7, which each consist out of connected fingers 11, 12, which are provided with respective openings 13, 14 which are in line with the respective first openings 8 and second openings 9 of the links 3.

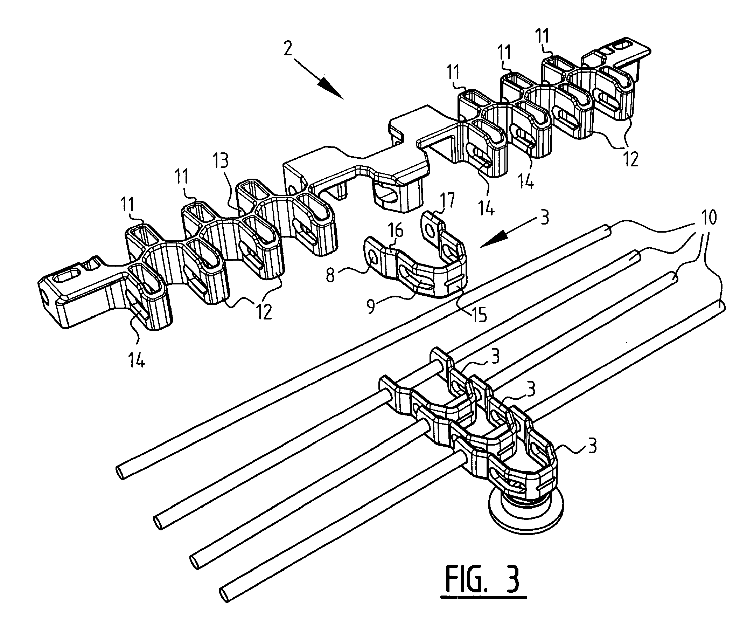

In figure 3 the conveyor belt 1 according to figure 1 is shown in this assembled state. A link 3 is shown separately and this link has a central portion 15 with two legs 16, 17 extending there from. Each leg is provided with a first opening 8 and a slot-shaped second opening 9.

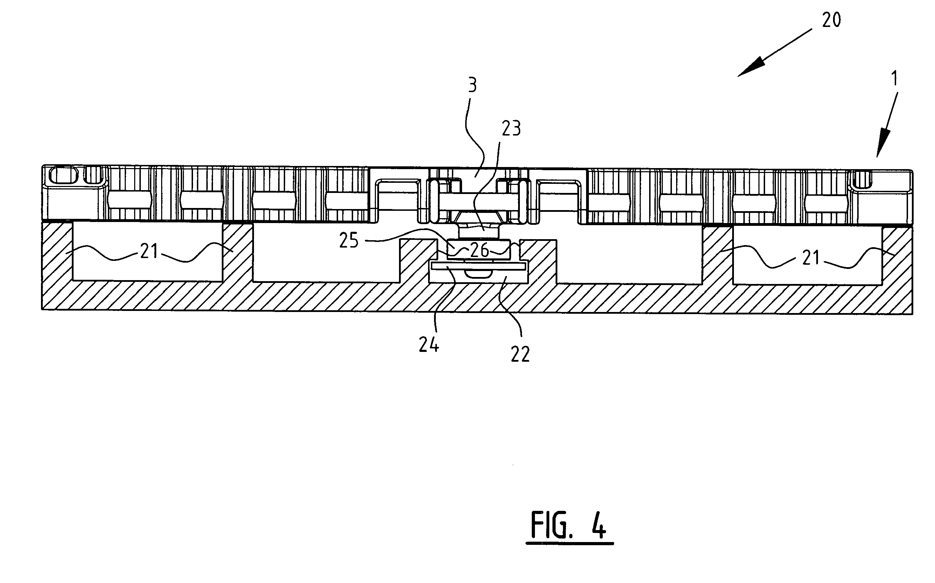

In figure 4 a conveyor system 20 according to the invention is shown. This conveyor system 20 comprises a conveyor belt 1 shown in figure 1, a support 21 for the conveyor belt 1 and a guide track having a C-shaped cross-section 22.

From figure 4 it is clear that the guide post 4 is connected to a deck element 2 by a central rod 23. At the end of this rod 23 a disc-shaped element 24 is arranged. This disc-shaped element prevents the conveyor belt 1 from derailing from the guide track 22.

A roller bearing 25 is furthermore provided on the rod 23, which enables a rolling contact between the side surfaces 26 of the C-shaped guide track 22.

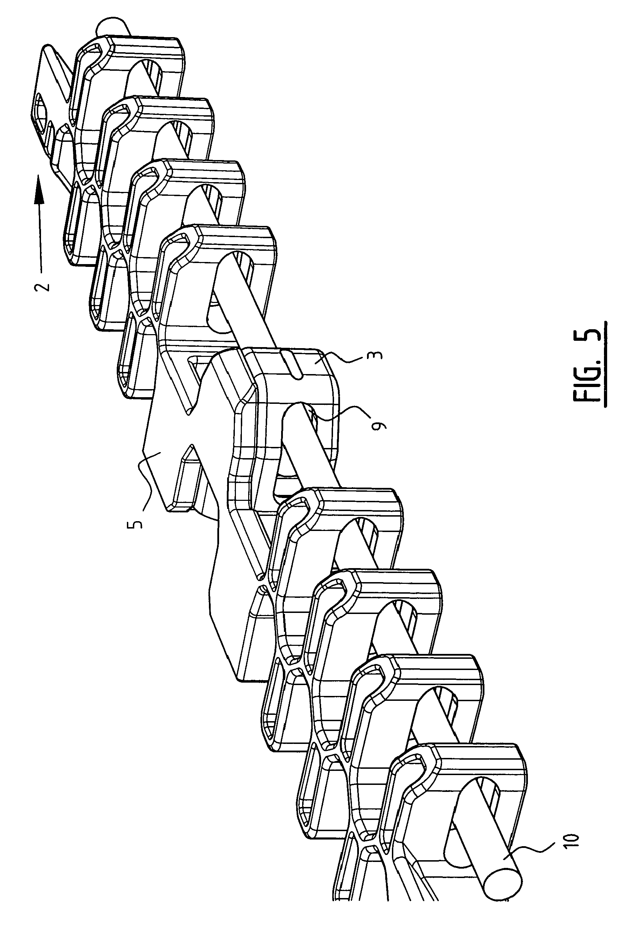

In figure 5 it is shown more in detail, that the central portion 5 of the deck element 2 is interposed between the rod 10 and the elongate second openings 9. This provides for a bearing of the rod in the central portion 5, preventing direct contact with the link 3, and thus preventing wear.

## Claims

1. Conveyor belt comprising:
- a chain having a plurality of links, interconnected by rods, wherein each link has a first opening and a second opening, at least one of the openings being elongate and wherein a rod connecting two following links extends through the first opening of the first link and through the second opening of the second link;
- deck elements having a deck support surface, which deck elements are connected to a link of the chain and which extend on both sides of the link; and
- at least one guide post connected to a deck element, wherein the guide post extends perpendicular to the deck support surface of the deck elements.

2. Conveyor belt according to claim 1, wherein the deck elements are provided with first and second openings inline with the first and second openings of the respective link to which the deck element is connected.

3. Conveyor belt according to claim 1 or 2, wherein each link has a substantially U-shape comprising two leg portions and an interconnecting portion.

4. Conveyor belt according to claim 3, wherein the first and second openings are arranged in the leg portions.

5. Conveyor belt according to any of the preceding claims, wherein a portion of a deck element is interposed between the rod extending through the elongate opening of a link and said link, in order to provide a bearing in the belt.

6. Conveyor belt according to claim 5, wherein the interposed portion of the deck element is in contact with both leg portions, in order to fill the space between the leg portions.

7. Conveyor belt according to any of the preceding claims, wherein the at least one guide post has in transport direction of the conveyor belt a T-shaped cross section.

8. Conveyor belt according to any of the preceding claims, wherein the guide post comprises a roller bearing for rolling contact with a guide track.

9. Conveyor system comprising:
- a conveyor belt according to any of the preceding claims;
- a support for supporting the conveyor belt;
- a guide track in which the at least one guide post of the conveyor belt extends.

10. Conveyor system according to claim 9 having a conveyor belt according to claim 7, wherein the guide track has a C-shaped cross-section.
